(19) Europäisches Patentamt / European Patent Office / Office européen des brevets

(11) **EP 2 561 595 B1**

(12) **FASCICULE DE BREVET EUROPEEN**

(45) Date de publication et mention de la délivrance du brevet:
**27.05.2015 Bulletin 2015/22**

(21) Numéro de dépôt: **11717703.0**

(22) Date de dépôt: **06.04.2011**

(51) Int Cl.:
*H02P 9/02* (2006.01)    *H02J 7/14* (2006.01)
*H02P 9/48* (2006.01)

(86) Numéro de dépôt international:
**PCT/FR2011/050770**

(87) Numéro de publication internationale:
**WO 2011/131888 (27.10.2011 Gazette 2011/43)**

(54) **PROCEDE DE COMMANDE DE REGULATION D'UN ALTERNATEUR DE VEHICULE AUTOMOBILE, ET DISPOSITIFS CORRESPONDANTS**

VERFAHREN ZUR STEUERUNG DER REGELUNG DER LICHTMASCHINE EINES KRAFTFAHRZEUGS UND ZUGEHÖRIGE VORRICHTUNGEN

METHOD OF CONTROLLING THE REGULATION OF A MOTOR VEHICLE ALTERNATOR, AND CORRESPONDING DEVICES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.04.2010 FR 1052965**

(43) Date de publication de la demande:
**27.02.2013 Bulletin 2013/09**

(73) Titulaire: **Valeo Equipements Electriques Moteur 94046 Créteil Cedex (FR)**

(72) Inventeurs:
- **TISSERAND, Pierre**
  **F-94450 Limeil Brevannes (FR)**
- **CHASSARD, Pierre**
  **F-94000 Creteil (FR)**
- **GENDRON, Vincent**
  **F-94100 Saint Maur des Fosses (FR)**
- **DUTHILLEUL, Guillaume**
  **F-33770 Salles (FR)**

(56) Documents cités:
| | |
|---|---|
| **US-A- 5 646 599** | **US-A- 6 137 247** |
| **US-A1- 2003 042 875** | **US-A1- 2006 082 347** |
| **US-A1- 2008 088 282** | |

EP 2 561 595 B1

**Description**

**DOMAINE TECHNIQUE DE L'INVENTION.**

La présente invention concerne un procédé de commande d'un dispositif de régulation d'un alternateur de véhicule automobile. L'invention concerne également un dispositif de régulation et une unité de contrôle du moteur mettant en oeuvre ce procédé, ainsi que l'alternateur comprenant ce dispositif de régulation.

**ARRIERE PLAN TECHNOLOGIQUE DE L'INVENTION.**

Dans le domaine de l'automobile, il est bien connu de maintenir la tension fournie au réseau électrique de bord par l'alternateur du véhicule à une valeur de consigne prédéterminée, indépendamment de la vitesse de rotation du moteur ou de la consommation électrique des équipements, au moyen d'un dispositif de régulation dit « régulateur ».

De nos jours, les équipementiers de l'automobile ont développé des alternateurs très performants en mettant en oeuvre des systèmes électroniques de puissance contrôlés par des circuits faisant appel à des techniques numériques, reposant par exemple sur l'utilisation de microprocesseurs ou microcontrôleurs.

A la différence des régulateurs à bilames d'autrefois, qui fonctionnaient autour d'une tension de régulation fixe indépendamment du mode de fonctionnement du véhicule, les dispositifs de régulation électroniques modernes mettent à profit les capacité de traitement de l'électronique pour recevoir des valeurs de consigne variables transmises par une unité de contrôle du moteur dans le but d'optimiser le prélèvement de couple en fonction de la production d'énergie électrique nécessaire.

On conçoit que l'alternateur ne doive pas prélever de couple au démarrage du moteur, voire au cours d'une accélération pour améliorer les performances des véhicules de petites cylindrées, ou que le couple prélevé puisse être plus réduit parce que la batterie est déjà suffisamment chargée.

notamment une commande d'arrêt de la production d'énergie, ainsi que pour la transmission de valeurs discrètes du rapport cyclique des éléments de commutation du courant d'excitation de l'alternateur correspondant à un ensemble discret de valeurs de consigne.

Toutefois, une liaison série semblant peu fiable dans l'environnement perturbé du capot moteur, le brevet US6137247 du même déposant, propose en remplacement une transmission par impulsions modulées en largueur PWM (acronyme de l'anglais « Pulse Width Modulation »).

Les valeurs de consigne du régulateur, comprises entre 12 V et 15 V, sont transmisses par des impulsions de période prédéterminée dont le rapport cyclique est compris entre 10% et 90% par exemple.

Afin de permettre un contrôle plus précis de l'alternateur, d'autres paramètres de fonctionnement, notamment le niveau de l'excitation, sont transmis en utilisant également des impulsions de rapport cycliques variables, mais de périodes différentes de celles fixant les valeurs de consigne.

Dans un générateur d'alimentation électrique pour véhicule automobile, il est connu par US5646599 de diviser dans un signal de type PWM une plage de rapport cyclique en une pluralité de sous-plages. Le signal PWM est transmis par un contrôleur de charge haute tension à un contrôleur de courant d'excitation. Les sous-plages de rapport cyclique sont affectées à différentes zones telles qu'une zone de contrôle de tension normale, une zone de contrôle de haute tension, une zone d'arrêt de la génération d'alimentation électrique et de signal de défaut. Le signal PWM avec un rapport cyclique dans les différentes zones est transmis au contrôleur de courant d'excitation de manière à commander le mode de génération d'alimentation électrique du générateur. Lorsqu'un défaut est détecté dans un circuit haute tension, le signal PWM prend alors un rapport cyclique compris dans la zone d'arrêt de la génération d'alimentation électrique et de signal de défaut et provoque l'arrêt de la génération d'alimentation électrique et l'activation d'une lampe indiquant un défaut.

Par ailleurs, il est également connu par US2003/0042875 un régulateur de tension pour un alternateur qui fournit un signal de ratio d'alimentation électrique ayant un rapport cyclique correspondant à un courant fourni à une bobine d'excitation de l'alternateur. Ce signal de ratio d'alimentation électrique est fourni à un dispositif externe à travers une ligne de transmission de signal. Le rapport cyclique du signal de ratio d'alimentation électrique est supérieur à 10% lorsque l'alternateur est dans un mode de fonctionnement normal. Lorsqu'un défaut est détecté, le signal de ratio d'alimentation électrique est partiellement masqué par un signal de détection de défaut. Le rapport cyclique du signal de ratio d'alimentation électrique est alors réduit à moins de 10% et cette modification du signal peut être détectée par le dispositif externe.

Cependant des signaux présentant des rapports cycliques inférieurs à 10% ou supérieurs à 90%% sont considérés comme trop sensibles au bruit.

Il est bien connu qu'une transmission PWM est une alternative simple et robuste à une transmission série ; cependant l'utilisation d'impulsions de plusieurs périodes différentes pour augmenter la capacité du canal semble aller à l'encontre de l'objectif de simplicité initial.

Il demeure donc un besoin pour une transmission PWM simple permettant de transmettre à la fois les valeurs de consignes du régulateur et d'autres paramètres de fonctionnement de l'alternateur.

**DESCRIPTION GENERALE DE L'INVENTION.**

La présente invention vise par conséquent à répondre à ce besoin.

Elle a précisément pour objet un procédé de commande d'un dispositif de régulation d'un alternateur de véhicule automobile.

Ce régulateur, de manière connue, asservit une tension continue d'un réseau électrique de bord alimenté par cet alternateur à une valeur de consigne prédéterminée en contrôlant un circuit d'excitation.

Le procédé dont il s'agit est du type de ceux consistant, dans un premier mode de fonctionnement nominal de l'alternateur, à :

Ce régulateur, de manière connue, asservit une tension continue d'un réseau électrique de bord alimenté par cet alternateur à une valeur de consigne prédéterminée en contrôlant un circuit d'excitation.

Le procédé dont il s'agit comprend

dans un premier mode de fonctionnement nominal de l'alternateur, des étapes de :

- transmettre au dispositif de régulation au moyen d'une ligne de communication des premières impulsions modulées en largeur présentant une période prédéterminée et un rapport cyclique de consigne représentatif de la valeur de consigne continûment compris entre un premier rapport cyclique de référence et un second rapport cyclique de référence; et
- détecter les premières impulsions par le dispositif de régulation et générer la valeur de consigne; et

dans un second mode de fonctionnement sans génération de puissance de l'alternateur, des étapes de :

- transmettre au dispositif de régulation des secondes impulsions modulées en largeur présentant la même période prédéterminée et un rapport cyclique spécifique inférieur au premier rapport cyclique de référence et compris entre un rapport cyclique bas et un rapport cyclique haut; et
- détecter les secondes impulsions par le dispositif de régulation dans une première étape et générer un signal d'ouverture du circuit d'excitation de l'alternateur dans une seconde étape.

Conformément à l'invention, le procédé comprend également, dans ledit second mode de fonctionnement sans génération de puissance, les étapes de :

- détecter une activité de la ligne de communication préalablement à la première étape;
- si cette ligne de communication est active, calculer des moyennes de rapports cycliques courants d'une pluralité des premières ou secondes impulsions en ignorant un nombre prédéterminé des premiers rapports cycliques courants reçus, et comparer ces moyennes au rapport cyclique bas et au rapport cyclique haut au cours de la première étape ; et
- générer le signal d'ouverture au cours de la deuxième étape si un second nombre prédéterminé de moyennes sont comprises entre le rapport cyclique bas et le rapport cyclique haut.

Selon une autre caractéristique particulière de l'invention, le signal d'ouverture est désactivé si aucune activité n'est détectée sur la ligne de communication ou si aucune des moyennes calculées n'est comprise entre le rapport cyclique bas et le rapport cyclique haut.

Selon encore une autre caractéristique particulière de l'invention, le signal d'ouverture est de préférence prépondérant sur un mode de pré-excitation ou sur un mode de régulation de phase de l'alternateur.

Selon encore une autre caractéristique particulière de l'invention, on tire bénéfice du fait que les premières et secondes impulsions sont de préférence transmises par une unité de contrôle du moteur pour provoquer la marche ou l'arrêt de la génération de puissance alternativement au contact général du véhicule.

L'invention concerne également un dispositif de régulation d'un alternateur de véhicule automobile apte à la mise en oeuvre du procédé brièvement décrit ci-dessus.

Le dispositif de régulation est du type de ceux comprenant :

- des moyens d'asservissement d'une tension continue d'un réseau électrique de bord alimenté par cet alternateur à une valeur de consigne prédéterminée en contrôlant un circuit d'excitation ;
- des premiers moyens de réception via une entrée de communication de premières impulsions modulées en largeur présentant une période prédéterminée et un rapport cyclique de consigne représentatif de la valeur de consigne continûment compris entre un premier rapport cyclique de référence et un second rapport cyclique de référence;
- des premiers moyens de détection des premières impulsions et des premiers moyens de génération de la valeur de consigne ;
- des seconds moyens de réception via l'entrée de communication de secondes impulsions modulées en largeur présentant la même période prédéterminée et un rapport cyclique spécifique inférieur au premier rapport cyclique de référence et compris entre un rapport cyclique bas et un rapport cyclique haut; et
- des seconds moyens de détection des secondes impulsions et des seconds moyens de génération d'un signal d'ouverture du circuit d'excitation de l'alternateur.

Conformément à l'invention, le dispositif de régulation comprend en outre des troisièmes moyens de détection d'une activité sur l'entrée de communication, et les seconds moyens de détection comprennent des moyens d'évaluation et des moyens de rejet de rapports cycliques courants d'une pluralité des premières ou secondes impulsions, des moyens de calcul de moyennes de ces rapports cycliques courants et des moyens de comparaison de ces moyennes au rapport cyclique bas et au rapport cyclique haut.

L'invention concerne aussi un alternateur de véhicule automobile comprenant le dispositif de régulation tel que décrit brièvement ci-dessus.

Ces quelques spécifications essentielles auront rendu évidents pour l'homme de métier les avantages apportés par le procédé de commande d'un dispositif de régulation selon l'invention, ainsi que par le dispositif de régulation et l'alternateur correspondant, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

**BREVE DESCRIPTION DES DESSINS.**

La **Figure 1** est un schéma synoptique d'une installation à bord d'un véhicule d'un alternateur selon l'invention.

La **Figure 2** est un schéma de principe montrant le codage de la valeur de consigne du dispositif de régulation montré sur la **Figure 1** et d'une commande d'ouverture d'un circuit d'excitation par une modulation en largeur d'impulsion selon l'invention.

La **Figure 3** est un diagramme de temps montrant la succession des modes de fonctionnement d'un alternateur connu de l'état de la technique après la mise de contact.

Les **Figures 4a, 4b, 4c et 4d** sont des diagrammes de temps montrant la succession des modes de fonctionnement d'un alternateur comprenant un mode sans génération de puissance selon l'invention.

La **Figure 5** est un diagramme montrant le décodage d'une commande d'ouverture d'un circuit d'excitation transmise par une modulation en largeur d'impulsion selon l'invention.

**DESCRIPTION DES MODES DE REALISATION PREFERES DE L'INVENTION.**

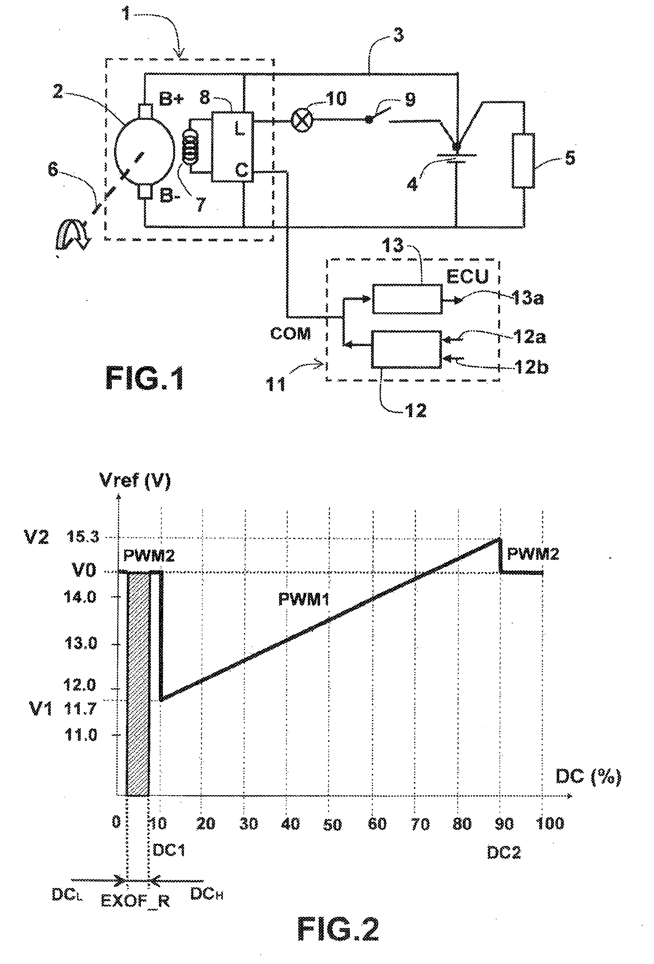

Un alternateur 1 du type concerné par l'invention, représenté sur la **Figure 1**, comprend :

- un stator 2 dont les enroulements de phases fournissent, après redressement, une tension continue B+, B- au réseau électrique de bord 3 pour recharger une batterie 4 et alimenter diverses charges électriques 5 ;

- un rotor 6 couplé mécaniquement au moteur thermique du véhicule ;

- un circuit d'excitation 7 sous la forme d'une bobine d'excitation comprise dans le rotor et contrôlé par un dispositif de régulation 8 permettant de fixer la tension continue B+, B- à une valeur de consigne Vref.

Le dispositif de régulation 8 est généralement mis en service lors de la fermeture du contact général 9 du véhicule à l'initiative du conducteur (souvent immédiatement suivi par le lancement du moteur thermique par un démarreur).

Le bon fonctionnement de l'alternateur 1 est signalé au conducteur par un témoin 10 relié à la borne marche/ arrêt L du régulateur 8.

Dans la plupart des régulateurs 8 des alternateurs 1 qui équipent les véhicules, notamment sur les véhicules ne nécessitant pas un contrôle électronique sophistiqué, la valeur de consigne Vref est fixe.

Cette valeur de consigne fixe V0 est généralement un peu supérieure à 14 V pour charger dans de bonnes conditions un accumulateur au plomb 4.

Quand la batterie est chargée, il n'est pas nécessaire que la tension B+, B-du réseau électrique de bord 3 soit maintenue à ce niveau, le prélèvement du couple correspondant sur le moteur thermique est donc inutile.

Dans des dispositifs de régulation 8 plus complexes d'alternateurs 1 équipant des véhicules de plus haut de gamme, les valeurs de consigne Vref sont variables en fonction de l'état de charge de la batterie 4, des charges électriques 5 reliées au réseau électrique de bord 3, ou des phases de fonctionnement (démarrage, ralenti, accélération, décélération, calage) du moteur.

Ces valeurs de consigne Vref sont généralement transmises par une unité de contrôle du moteur 11 sur une ligne de communication COM à une borne spécifique C du régulateur 8 par des moyens de transmission spécifiques 12, 12a.

Réciproquement, ces régulateurs 8 avancés transmettent sur la même ligne de communication COM des informations d'état reçues par des moyens de réception spécifiques 13, 13a de l'unité de contrôle du moteur 11 à destination des autres systèmes du véhicule et du conducteur.

La transmission des valeurs de consigne Vref est le plus souvent réalisée par une modulation en largeur d'impulsions, préférée à d'autres types de liaisons, telle qu'une liaison série, pour sa simplicité et sa meilleure immunité au bruit.

Habituellement, les valeurs de consigne Vref sont comprises entre 11,5 V et 15,5 V, correspondant à des rapports cycliques compris entre 0% et 100%.

Toutefois, l'expérience montre que les rapports cycliques faibles PWM2 inférieurs à un premier seuil DC1 de l'ordre de 10%, ou au contraire les rapports cycliques élevés PWM2 supérieurs à un second seuil DC2 de l'ordre de 90%, sont, en plus d'être difficilement détectables de manière fiable, peu utile car correspondant à des valeurs trop basses ou trop hautes de tension. Ils ne sont généralement pas utilisés dans un premier mode de fonctionnement nominal de l'alternateur 1 pour assigner une valeur de consigne Vref variable, mais pour forcer une valeur de consigne fixe V0, comme le montre la **Figure 2**.

Il en résulte que dans les dispositifs de régulation existants, les rapports cycliques PWM1 compris entre les premier et second seuils DC1, DC2 permettent seulement d'assigner des valeurs de consigne Vref comprises entre une valeur basse V1 et une valeur haute V2, par exemple, de l'ordre de 11,7 V et 15,3 V, respectivement, dans cette forme de réalisation.

Les rapports cycliques inférieurs au premier seuil DC1, et inutilisés dans les régulateurs existants, pourraient permettre à l'unité de contrôle du moteur 11 de transmettre des informations supplémentaires, ou des ordres, à condition que le dispositif de régulation 8 puisse détecter dans cette plage, de manière fiable, des rapports cycliques spécifiques EXOF_R représentatifs de ces informations ou de ces ordres.

Un ordre qui revêtirait une grande importance au démarrage du moteur, ou pendant une accélération, est un ordre d'arrêt de la génération de puissance de l'alternateur 1 pour éviter un prélèvement de couple inutile.

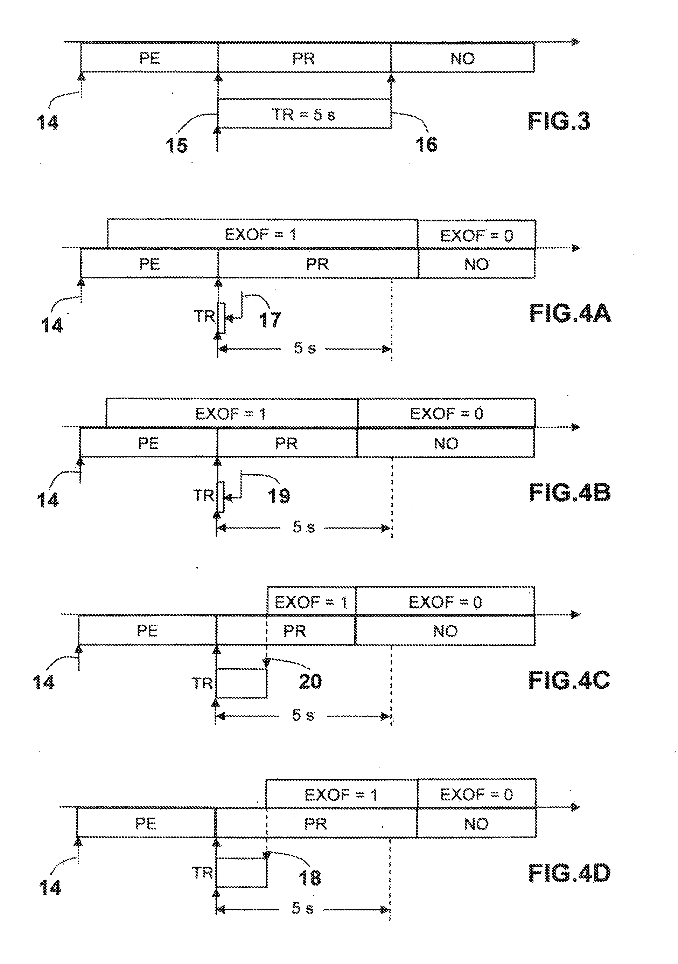

La **Figure 3** montre les modes de fonctionnement successifs d'un alternateur conventionnel à partir de la mise de contact 14 :

- un mode de pré-excitation PE pendant lequel l'excitation dite de magnétisation est appliquée jusqu'à ce que le moteur thermique ait atteint un seuil de vitesse prédéterminé ;
- un mode de pré-régulation PR, ou de régulation de phase, déclenché 15 quand la vitesse du moteur dépasse ce seuil de vitesse, pendant une durée prédéterminée TR, de préférence de l'ordre de 5 s, et au cours duquel seule une légère excitation est appliquée pour maintenir un niveau de phase prédéterminé ;
- un mode de fonctionnement nominal NO de l'alternateur, à l'issue 16 du délai de temporisation TR, au cours duquel l'alternateur fournit une puissance régulée.

Compte tenu de la perception immédiate par le conducteur d'un démarrage ou d'une accélération, la réponse à l'ordre d'arrêt de la génération de puissance doit être rapide et similaire à l'action de la clé de contact 9.

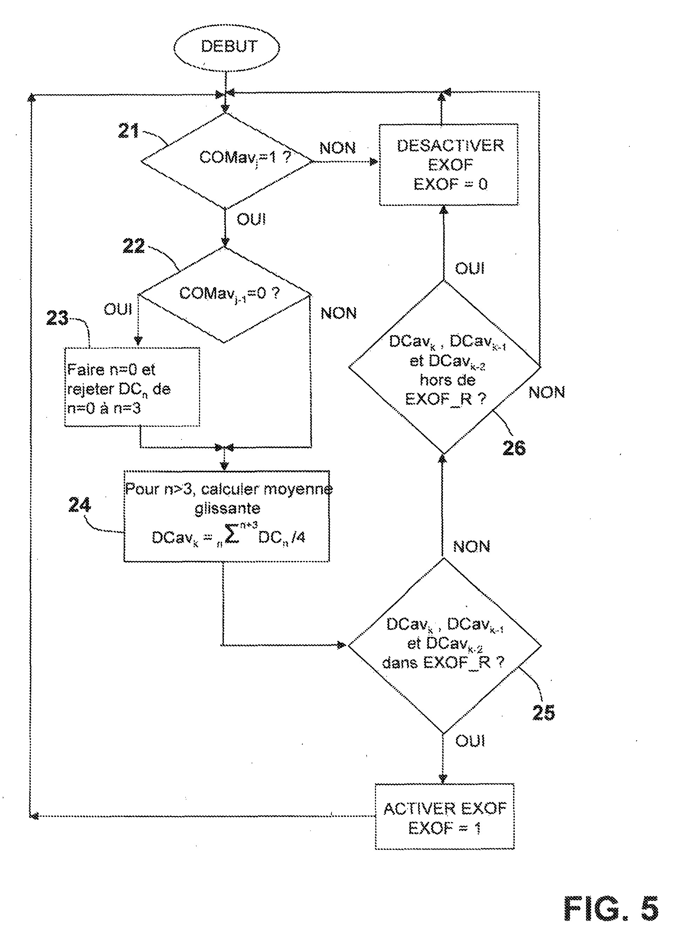

Le procédé de commande d'un dispositif de régulation 8 d'un alternateur 1 de nouvelle génération selon l'invention, qui sera décrit en détail en liaison avec la **Figure 5**, permet de détecter de manière fiable et rapide la transmission d'un tel ordre par l'unité de contrôle du moteur 11.

Dans l'alternateur 1 selon l'invention l'arrêt de la génération de puissance est obtenu par l'ouverture du circuit d'excitation 7 en réponse à un signal d'ouverture EXOF (par « ouverture du circuit d'excitation », on entend « ouverture du circuit de puissance de l'excitation », mais un faible courant peut circuler dans la bobine d'excitation 7 pour permettre la régulation de phase).

Le signal d'ouverture EXOF est prépondérant sur tous les modes de fonctionnement de l'alternateur 1, comme le montrent bien schématiquement les **Figures 4a, 4b, 4c et 4d** :

- le mode de pré-régulation PR est prolongé pendant toute la durée où le signal d'ouverture du circuit d'excitation EXOF est valide (EXOF=1) (**Figures 4a, 4d**), par inhibition 17 ou arrêt 18 du compteur générant le délai de temporisation TR ;
- le mode de fonctionnement nominal NO de l'alternateur 1 est forcé quand le signal d'ouverture du circuit d'excitation EXOF est invalide (EXOF=0), même si le mode de pré-régulation PR est en cours (**Figures 4b, 4c**), par inhibition 19 ou arrêt 20 de ce compteur.

Selon l'invention, l'ordre d'arrêt de la génération de puissance est transmis par l'unité de contrôle du moteur 11 en utilisant une plage de rapports cycliques EXOF_R non utilisés pour la transmission des valeurs de consigne Vref du régulateur 8. Cette plage de rapports cycliques EXOF_R peut par exemple se situer en haut ou en bas de la dynamique des rapports cycliques utilisés. Dans la forme de réalisation décrite ici, la plage EXOF_R utilisée se situe dans la partie basse de la dynamique.

Cette plage EXOF_R est comprise entre un rapport cyclique bas $DC_L$ et un rapport cyclique haut $DC_H$, tous deux inférieurs à un premier rapport cyclique de référence DC1 correspondant de préférence au seuil bas des régulateurs standards, c'est-à-dire de l'ordre de 10%, comme le montre la **Figure 2**.

Selon le procédé de l'invention, la fiabilité de la transmission est obtenue notamment en exécutant périodiquement dans le dispositif de régulation 8 l'algorithme représenté sur la **Figure 5**.

Une première boucle d'attente 21 maintient le signal d'ouverture du circuit d'excitation EXOF désactivé (EXOF=O) tant qu'aucune activité n'est détectée (CO-$Mav_j$=0) sur l'entrée de communication C du régulateur 8.

Quand une activité est détectée ($COM_{avj}$=1), par exemple des fronts impulsionnels ou des fréquences, une boucle de rejet 22, 23 évalue les rapports cycliques courants $DC_n$ des impulsions reçues et détermine 22 si ce sont les premiers reçus ($COMav_{j-1}$=0). Dans ce cas, un premier nombre prédéterminé, de préférence 4, de rapports cycliques courants $DC_0$, $DC_1$, $DC_2$, $DC_3$ sont rejetés 23, car ils sont considérés comme étant les plus sensibles aux aléas de l'établissement de la communication.

Les rapports cycliques courants $DC_n$ suivants sont considérés comme valides et permettent de calculer 24 une moyenne $DCav_k$ sur une fenêtre par exemple glissante, portant par exemple sur 4 rapports cycliques courants $DC_n$ successifs :

$$DCav_k = {}_n\sum^{n+3} DC_n / 4$$

Bien entendu, d'autres algorithmes de calcul de moyenne pourront être utilisés selon les applications de l'invention.

Un second nombre prédéterminé de ces moyennes glissantes $DCav_k$, $DCav_{k-1}$, $DCav_{k-2}$, de préférence 3, sont comparées dans une deuxième boucle d'attente 25 au rapport cyclique bas $DC_L$ et au rapport cyclique haut $DC_H$. Dans le cas où toutes ces moyennes $DCav_k$, $DCav_{k-1}$, $DCav_{k-2}$ sont simultanément dans la plage EXOF_R codant la transmission de l'ordre de fonctionnement sans génération de puissance, le signal d'ouverture du circuit d'excitation EXOF est validé (EXOF=1).

Dans le cas contraire, une troisième boucle d'attente 26 détermine si toutes les moyennes $DCav_k$, $DCav_{k-1}$, $DCav_{k-2}$ sont simultanément hors de la plage EXOF_R. Dans ce cas, le signal d'ouverture du circuit d'excitation EXOF est désactivé (EXOF=O).

L'algorithme de filtrage décrit ci-dessus et montré sur la **Figure 5** permet d'utiliser de manière fiable des rapports cycliques $DC_n$ de faibles valeurs, inférieurs à 10%, que l'état de la technique considérait comme trop sujet au bruit.

Cet algorithme est par exemple mis en oeuvre par programme dans les blocs numériques de calcul et de traitement constitués de microprocesseurs ou de microcontrôleurs ou par des circuits dédiés ou des modules de logique micro câblée pouvant être étendus à des réseaux de portes de type FPGA.

Dans les modes de réalisation préférés de l'invention, le microcode d'une unité de contrôle du moteur standard est aussi avantageusement mis à niveau pour mettre en oeuvre le procédé selon l'invention et transmettre au dispositif de régulation 8 un ordre de fonctionnement sans génération de puissance de l'alternateur 1 en utilisant la ligne de communication COM par impulsions modulées en largeur habituelle.

Alternativement, le procédé selon l'invention peut être mis en oeuvre dans les moyens de transmissions spécifiques 12, 12b d'une unité de contrôle du moteur 11 par tout autre moyen que l'homme de métier considérera comme équivalents.

Comme il va de soi, l'invention ne se limite donc pas aux seuls modes de réalisation préférentiels décrits ci-dessus.

Notamment, le premier nombre prédéterminé de rapports cycliques rejetés en début de transmission égal à 4, le second nombre prédéterminé de moyennes glissantes nécessaires à la validation du signal d'ouverture du circuit d'excitation EXOF égal à 3, et l'amplitude de ces moyennes glissantes fixée à 4, ne sont donnés qu'à titre d'exemples. Le choix de toutes autres valeurs numériques ne constituerait que des variantes de réalisation, même si elles n'étaient plus optimales.

Ces autres modes de réalisation ne sortiraient pas du cadre de la présente invention dans la mesure où ils résultent des revendications ci-après.

## Revendications

1.  Procédé de commande d'un dispositif de régulation (8) d'un alternateur (1) de véhicule automobile asservissant une tension continue (B+, B-) d'un réseau électrique de bord (3) alimenté par ledit alternateur (1) à une valeur de consigne prédéterminée (Vref) en contrôlant un circuit d'excitation (7), ledit procédé, dans un premier mode de fonctionnement nominal dudit alternateur (1), comprenant les étapes de :

    - transmettre audit dispositif de régulation (8) au moyen d'une ligne de communication (COM) des premières impulsions modulées en largeur présentant une période prédéterminée et un rapport cyclique de consigne (PWM1) représentatif de ladite valeur de consigne (Vref) continûment compris entre un premier rapport cyclique de référence (DC1) et un second rapport cyclique de référence (DC2); et
    - détecter lesdites premières impulsions par ledit dispositif de régulation (8) et générer ladite valeur de consigne (Vref) ; et

    dans un second mode de fonctionnement sans génération de puissance dudit alternateur (1), comprenant les étapes de :

    - transmettre audit dispositif de régulation (8) des secondes impulsions modulées en largeur présentant ladite période prédéterminée et un rapport cyclique spécifique (EXOF_R) inférieur audit premier rapport cyclique de référence (DC1) et compris entre un rapport cyclique bas ($DC_L$) et un rapport cyclique haut ($DC_H$) ;
    - détecter lesdites secondes impulsions par ledit dispositif de régulation (8) dans une première étape (22, 23, 24) et générer un signal d'ouverture (EXOF) dudit circuit d'excitation (7) dans une seconde étape (25) ; **caractérisé en ce que**

    dans le second mode de fonctionnement sans génération de puissance, ledit procédé comprend également les étapes de :

    - détecter (21) une activité de ladite ligne de communication (COM) préalablement à ladite première étape (22, 23, 24);

- si ladite ligne de communication (COM) est active, calculer (24) des moyennes ($DCav_k$) de rapports cycliques courants (DCn) d'une pluralités desdites premières ou secondes impulsions en ignorant (23) un premier nombre prédéterminé des premiers desdits rapports cycliques courants ($DC_0$, $DC_1$, $DC_2$, $DC_3$) reçus, et comparer lesdites moyennes ($DCav_k$) audit rapport cyclique bas ($DC_L$) et rapport cyclique haut ($DC_H$) au cours de ladite première étape (22, 23, 24); et

- générer ledit signal d'ouverture (EXOF) au cours de ladite deuxième étape (25) si un second nombre prédéterminé desdites moyennes ($DCav_k$, $DCav_{k-1}$, $DCav_{k-2}$) sont comprises entre ledit rapport cyclique bas ($DC_L$) et ledit rapport cyclique haut ($DC_H$).

2. Procédé de commande d'un dispositif de régulation (8) d'un alternateur (1) de véhicule automobile selon la revendication 1, **caractérisé en ce que** ledit signal d'ouverture (EXOF) est désactivé si aucune activité n'est détectée (21) sur ladite ligne de communication (COM) ou si aucune,desdites moyennes ($DCav_k$) n'est comprise (26) entre ledit rapport cyclique bas ($DC_L$) et ledit rapport cyclique haut ($DC_H$).

3. Procédé de commande d'un dispositif de régulation (8) d'un alternateur (1) de véhicule automobile selon la revendication 1 ou 2, **caractérisé en ce que** ledit signal d'ouverture (EXOF) est prépondérant sur un mode de pré-excitation (PE) ou sur un mode de régulation de phase (PR) dudit alternateur (1).

4. Procédé de commande d'un dispositif de régulation (8) d'un alternateur (1) de véhicule automobile selon l'une quelconque des revendications 1 à 3 précédentes, **caractérisé en ce que** lesdites premières et secondes impulsions sont transmises par une unité de contrôle du moteur (11) pour provoquer la marche ou l'arrêt d'une génération de puissance par ledit alternateur (1) alternativement au contact général (9) dudit véhicule.

5. Dispositif de régulation (8) d'un alternateur (1) de véhicule automobile apte à la mise en oeuvre du procédé selon l'une quelconque des revendications 1 à 4 précédentes, du type de ceux comprenant :

   - des moyens d'asservissement d'une tension continue (B+, B-) d'un réseau électrique de bord (3) alimenté par ledit alternateur (1) à une valeur de consigne prédéterminée (Vref) en contrôlant un circuit d'excitation (7) ;
   - des premiers moyens de réception via une entrée de communication (C) de premières impulsions modulées en largeur présentant une période prédéterminée et un rapport cyclique de consigne (PWM1) représentatif de ladite valeur de consigne (Vref) continûment compris entre un premier rapport cyclique de référence (DC1) et un second rapport cyclique de référence (DC2);

   - des premiers moyens de détection desdites premières impulsions et des premiers moyens de génération de ladite valeur de consigne (Vref) ;
   - des seconds moyens de réception via ladite entrée de communication (C) de secondes impulsions modulées en largeur présentant ladite période prédéterminée et un rapport cyclique spécifique ($EXOF\_R$) inférieur audit premier rapport cyclique de référence (DC1) et compris entre un rapport cyclique bas ($DC_L$) et un rapport cyclique haut ($DC_H$) ;
   - des seconds moyens de détection desdites secondes impulsions et des seconds moyens de génération d'un signal d'ouverture (EXOF) dudit circuit d'excitation (7) ; **caractérisé en ce qu'**il comprend en outre des troisièmes moyens de détection d'une activité sur ladite entrée de communication (C), et **en ce que** lesdits seconds moyens de détection comprennent des moyens d'évaluation de rapports cycliques courants (DCn) d'une pluralité desdites premières ou secondes impulsions, des moyens de rejet desdits rapports cycliques courants ($DC_0$, $DC_1$, $DC_2$, $DC_3$), des moyens de calcul de moyennes ($DCav_k$) desdits rapports cycliques courants (DCn) et des moyens de comparaison desdites moyennes ($DCav_k$, $DCav_{k-1}$, $DCav_{k-2}$) audits rapport cyclique bas ($DC_L$) et rapport cyclique haut ($DC_H$).

6. Alternateur (1) de véhicule automobile comprenant un dispositif de régulation (8) selon la revendication 5.

**Patentansprüche**

1. Verfahren zur Steuerung eines Reglers (8) einer Kraftfahrzeug-Lichtmaschine (1), der eine Gleichspannung (B+, B-) eines von der Lichtmaschine (1) gespeisten elektrischen Bordnetzes (3) auf einen vorbestimmten Sollwert (Vref) unter Steuerung eines Erregerkreises (7) regelt, wobei das Verfahren in einer ersten Nennbetriebsart der Lichtmaschine (1) die folgenden Schritte enthält:

   - Übertragung an den Regler (8) mittels einer Kommunikationsleitung (COM) von ersten breitenmodulierten Impulsen, die eine vorbestimmte Periode und ein für den Sollwert (Vref) repräsentatives zyklisches Sollverhältnis (PWM1) aufweisen, das kontinuierlich zwischen einem ersten zyklischen Bezugsverhältnis (DC1) und einem zweiten zyklischen Bezugsverhältnis (DC2) liegt; und
- Erfassung der ersten Impulse durch den Regler (8) und Erzeugung des Sollwerts (Vref); und

in einer zweiten Betriebsart ohne Leistungserzeugung der Lichtmaschine (1) die folgenden Schritte enthält:

- Übertragung an den Regler (8) von zweiten breitenmodulierten Impulsen, die die vorbestimmte Periode und ein spezifisches zyklisches Verhältnis (EXOF_R) niedriger als das erste zyklische Bezugsverhältnis (DC1) und zwischen einem niedrigen zyklischen Verhältnis ($DC_L$) und einem hohen zyklischen Verhältnis ($DC_H$) liegend aufweisen;
- Erfassung der zweiten Impulse durch den Regler (8) in einem ersten Schritt (22, 23, 24) und Erzeugung eines Öffnungssignals (EXOF) des Erregerkreises (7) in einem zweiten Schritt (25) ;

**dadurch gekennzeichnet, dass**
in der zweiten Betriebsart ohne Leistungserzeugung das Verfahren ebenfalls die folgenden Schritte enthält:

- Erfassung (21) einer Aktivität der Kommunikationsleitung (COM) vor dem ersten Schritt (22, 23, 24);
- wenn die Kommunikationsleitung (COM) aktiv ist, Berechnung (24) von Mittelwerten ($DCav_k$) laufender zyklischer Verhältnisse ($DC_n$) einer Vielzahl der ersten und zweiten Impulse unter Nichtbeachtung (23) einer ersten vorbestimmten Anzahl der ersten der empfangenen laufenden zyklischen Verhältnisse ($DC_0$, $DC_1$ $DC_2$, $DC_3$), und Vergleich der Mittelwerte ($DCav_k$) mit dem niedrigen zyklischen Verhältnis ($DC_L$) und dem hohen zyklischen Verhältnis ($DC_H$) während des ersten Schritts (22, 23, 24); und
- Erzeugung des Öffnungssignals (EXOF) während des zweiten Schritts (25), wenn eine zweite vorbestimmte Anzahl der Mittelwerte ($DCav_k$, $DCav_{k-1}$, $DCav_{k-2}$) zwischen dem niedrigen zyklischen Verhältnis ($DC_L$) und dem hohen zyklischen Verhältnis ($DC_H$) liegen.

2. Verfahren zur Steuerung eines Reglers (8) einer Kraftfahrzeug-Lichtmaschine (1) nach Anspruch 1, **dadurch gekennzeichnet, dass** das Öffnungssignal (EXOF) deaktiviert wird, wenn keinerlei Aktivität in der Kommunikationsleitung (COM) erfasst wird (21), oder wenn keiner der Mittelwerte ($DCav_k$) zwischen dem niedrigen zyklischen Verhältnis ($DC_L$) und dem hohen zyklischen Verhältnis ($DC_H$) liegt (26).

3. Verfahren zur Steuerung eines Reglers (8) einer Kraftfahrzeug-Lichtmaschine (1) nach Anspruch 1 oder 2, **dadurch gekennzeichnet, dass** das Öffnungssignal (EXOF) gegenüber einem Vorerregungsmodus (PE) oder gegenüber einem Phasenregelungsmodus (PR) der Lichtmaschine (1) vorrangig ist.

4. Verfahren zur Steuerung eines Reglers (8) einer Kraftfahrzeug-Lichtmaschine (1) nach einem der vorhergehenden Ansprüche 1 bis 3, **dadurch gekennzeichnet, dass** die ersten und zweiten Impulse von einer Steuereinheit des Motors (11) übertragen werden, um das Ein- oder Ausschalten einer Leistungserzeugung durch die Lichtmaschine (1) alternativ zum allgemeinen Kontakt (9) des Fahrzeugs zu bewirken.

5. Regler (8) einer Kraftfahrzeug-Lichtmaschine (1), der für die Durchführung des Verfahrens nach einem der vorhergehenden Ansprüche 1 bis 4 geeignet ist, von der Art von denjenigen, die enthalten:

- Einrichtungen zur Regelung einer Gleichspannung (B+, B-) eines elektrischen Bordnetzes (3), das von der Lichtmaschine (1) gespeist wird, auf einen vorbestimmten Sollwert (Vref) unter Steuerung eines Erregerkreises (7);
- erste Einrichtungen zum Empfang über einen Kommunikationseingang (C) von ersten breitenmodulierten Impulsen, die eine vorbestimmte Periode und ein für den Sollwert (Vref) repräsentatives zyklisches Sollverhältnis (PWM1) aufweisen, das kontinuierlich zwischen einem ersten zyklischen Bezugsverhältnis (DC1) und einem zweiten zyklischen Bezugsverhältnis (DC2) liegt;
- erste Einrichtungen zur Erfassung der ersten Impulse und erste Einrichtungen zur Erzeugung des Sollwerts (Vref);
- zweite Einrichtungen zum Empfang über den Kommunikationseingang (C) von zweiten breitenmodulierten Impulsen, die die vorbestimmte Periode und ein spezifisches zyklisches Verhältnis (EXOF_R) niedriger als das erste zyklische Bezugsverhältnis (DC1) und zwischen einem niedrigen zyklischen Verhältnis ($DC_L$) und einem hohen zyklischen Verhältnis ($DC_H$) liegend aufweisen;
- zweite Einrichtungen zur Erfassung der zweiten Impulse und zweite Einrichtungen zur Erzeugung eines Öffnungssignals (EXOF) des Erregerkreises (7);

**dadurch gekennzeichnet, dass** er außerdem dritte Einrichtungen zur Erfassung einer Aktivität am Kommunikationseingang (C) enthält, und dass die zweiten Erfassungseinrichtungen Einrichtungen zur Ermittlung laufender zyklischer Verhältnisse ($DC_n$) einer Vielzahl der ersten oder zweiten Impulse, Einrichtungen zur Zurückweisung der laufenden zyklischen Verhältnisse ($DC_0$, $DC_1$, $DC_2$, $DC_3$), Einrichtungen zur Berechnung von Mittelwerten ($DCav_k$) der laufenden zyklischen Verhältnisse ($DC_n$) und Einrichtungen zum Vergleich der Mittelwerte ($DCav_k$, $DCav_{k-1}$, $DCav_{k-2}$) mit den niedrigen zyklischen Verhältnissen ($DC_L$) und hohen zyklischen Verhältnissen ($DC_H$) enthalten.

6. Kraftfahrzeug-Lichtmaschine (1), die einen Regler (8) nach Anspruch 5 enthält.

**Claims**

1. Method for controlling a regulation device (8) of a motor vehicle alternator (1) slaving a DC voltage (B+, B-) of an onboard electrical network (3) powered by said alternator (1) to a predetermined setpoint value (Vref) by controlling an excitation circuit (7), said method,
in a first nominal mode of operation of said alternator (1), comprising the steps of:

- transmitting to said regulation device (8) by means of a communication line (COM) first width-modulated pulses exhibiting a predetermined period and a setpoint duty cycle (PWM1) representative of said setpoint value (Vref) continually lying between a first reference duty cycle (DC1) and a second reference duty cycle (DC2); and
- detecting said first pulses by said regulation device (8) and generating said setpoint value (Vref); and

in a second mode of operation without power generation from said alternator (1), comprising the steps of:

- transmitting to said regulation device (8) second width-modulated pulses exhibiting said predetermined period and a specific duty cycle (EXOF_R) lower than said first reference duty cycle (DC1) and lying between a low duty cycle ($DC_L$) and a high duty cycle ($DC_H$) ;
- detecting said second pulses by said regulation device (8) in a first step (22, 23, 24) and generating an opening signal (EXOF, for said excitation circuit (7) in a second step (25); **characterized in that**

in the second mode of operation without power generation, said method also comprises the steps of:

- detecting (21) an activity of said communication line (COM) prior to said first step (22, 23, 24);
- if said communication line (COM) is active, calculating (24) averages ($DCav_k$) of current duty cycles (DCn) of a plurality of said first or second pulses by disregarding (23) a first predetermined number of the first of said current duty cycles ($DC_0$, $DC_1$, $DC_2$, $DC_3$) received, and comparing said averages ($DCav_k$) to said low duty cycle ($DC_L$) and high duty cycle ($DC_H$) during said first step (22, 23, 24); and
- generating said opening signal (EXOF) during said second step (25) if a second predetermined number of said averages ($DCav_k$, $DCav_{k-1}$, $DCav_{k-2}$) lie between said low duty cycle ($DC_L$) and said high duty cycle ($DC_H$).

2. Method for controlling a regulation device (8) of a motor vehicle alternator (1) according to Claim 1, **characterized in that** said opening signal (EXOF) is deactivated if no activity is detected (21) on said communication line (COM) or if none of said averages ($DCav_k$) lies (26) between said low duty cycle ($DC_L$) and said high duty cycle ($DC_H$).

3. Method for controlling a regulation device (8) of a motor vehicle alternator (1) according to Claim 1 or 2, **characterized in that** said opening signal (EXOF) predominates over a pre-excitation mode (PE) or over a phase regulation mode (PR) of said alternator (1).

4. Method for controlling a regulation device (8) of a motor vehicle alternator (1) according to any one of the preceding Claims 1 to 3, **characterized in that** said first and second pulses are transmitted by a motor control unit (11) to provoke the switching on or the switching off of a generation of power by said alternator (1) alternately with the ignition switch (9) of said vehicle.

5. Regulation device (8) of a motor vehicle alternator (1) suitable for implementing the method according to any one of the preceding Claims 1 to 4, of the type of those comprising:

- means for slaving a DC voltage (B+, B-) of an onboard electrical network (3) powered by said alternator (1) to a predetermined setpoint value (Vref) by controlling an excitation circuit (7);
- first means for receiving, via a communication input (C), first width-modulated pulses exhibiting a predetermined period and a setpoint duty cycle (PWM1) representative of said setpoint value (Vref) lying continually between a first reference duty cycle (DC1) and a second reference duty cycle (DC2);
- first means for detecting said first pulses and first means for generating said setpoint value (Vref);
- second means for receiving, via said communication input (C), second width-modulated pulses exhibiting said predetermined period and a specific duty cycle (EXOF_R) lower than said first reference duty cycle (DC1) and lying between a low duty cycle ($DC_L$) and a high duty cycle ($DC_H$) ;
- second means for detecting said second pulses and second means for generating an opening signal (EXOF) for said excitation circuit (7);

**characterized in that** it further comprises third means for detecting an activity on said communication input (C), and **in that** said second detection means comprise means for evaluating current duty cycles (DCn) of a plurality of said first or second pulses, means for ejecting said current duty cycles ($DC_0$, $DC_1$, $DC_2$, $DC_3$), means for calculating averages ($DCav_k$) of said current duty cycles (DCn) and means for comparing said averages ($DCav_k$, $DCav_{k-1}$, $DCav_{k-2}$) to said low duty cycle ($DC_L$) and high duty cycle ($DC_H$).

6. Motor vehicle alternator (1) comprising a regulation device (8) according to Claim 5.

EP 2 561 595 B1

FIG.1

FIG.2

FIG.3

FIG.4A

FIG.4B

FIG.4C

FIG.4D

EP 2 561 595 B1

DEBUT

**21**
COMav$_j$=1 ?

NON →

DESACTIVER
EXOF
EXOF = 0

OUI ↓

**22**
COMav$_{j-1}$=0 ?

OUI / NON

**23**
Faire n=0 et
rejeter DC$_n$ de
n=0 à n=3

OUI

DCav$_k$ , DCav$_{k-1}$
et DCav$_{k-2}$
hors de
EXOF_R ?

NON

**26**

**24**
Pour n>3, calculer moyenne
glissante
$$DCav_k = {}_n\sum^{n+3} DC_n /4$$

NON

DCav$_k$ , DCav$_{k-1}$
et DCav$_{k-2}$
dans EXOF_R ?

**25**

OUI ↓

ACTIVER EXOF
EXOF = 1

**FIG. 5**

13

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6137247 A
- US 5646599 A

- US 20030042875 A